# EUROPEAN PATENT SPECIFICATION

(11) **EP 3 401 092 B1**
(45) Date of publication and mention of the grant of the patent: **03.03.2021**
(21) Application number: 18169995.0
(22) Date of filing: 29.04.2018
(51) Int. Cl.: B32B 27/08, B32B 27/22, B32B 27/30, B29C 48/00, B29C 48/08, B29C 48/21, B32B 5/14, B32B 7/02

(54) **INTERLAYER FILM WITH SHADE BAND**
ZWISCHENSCHICHTFILM MIT SCHATTENBAND
FILM INTERCOUCHE À BANDE TEINTÉE

(30) Priority: 10.05.2017 EP 17170328
(43) Date of publication of application: 14.11.2018
(73) Proprietor: Kuraray Europe GmbH, 65795 Hattersheim (DE)
(72) Inventor: Muguruma, Shinichi, 53840 Troisdorf (DE); Yasuda, Hirotaka, 53840 Troisdorf (DE)
(74) Representative: Janßen, Christian Oliver

(56) References cited:
- EP-A1- 3 029 001
- EP-A1- 3 070 063
- WO-A1-2016/030284

## Description

The invention relates to an interlayer film based on plasticized polyvinyl acetal having at least three layers, wherein the inner layer has reduced transparency.

Laminated safety glass consists usually of two glass panes and one adhesive film which combines the glass panes and is based on plasticized polyvinyl acetal, preferably of polyvinyl butyral (PVB). Laminated safety glass is used in particular as windscreens in motor vehicles.

Windscreens are often provided with a so called shade band in the upper part of the windscreen which protects the driver from direct sun light.

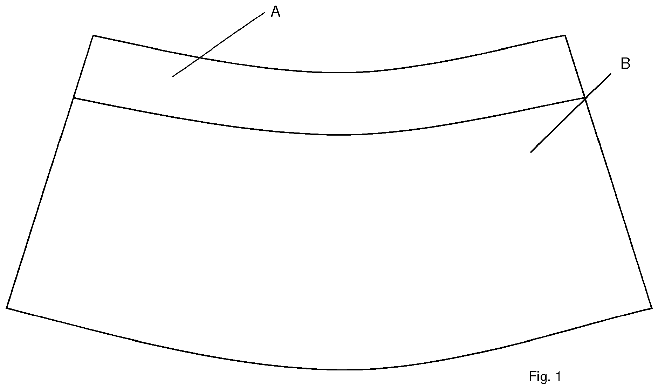

The shade band of the windscreen is provided by a coloured or tinted region of the interlayer film. This, in turn is provided to the interlayer by extrusion of a small layer of coloured or tinted material between two layers of clear material. As shown in Fig. 1 the coloured or tinted region A has usually a width of about 5 to 30 cm, as seen from the edged of the film, with a decreasing intensity of the colour towards the lower part of the windscreen.

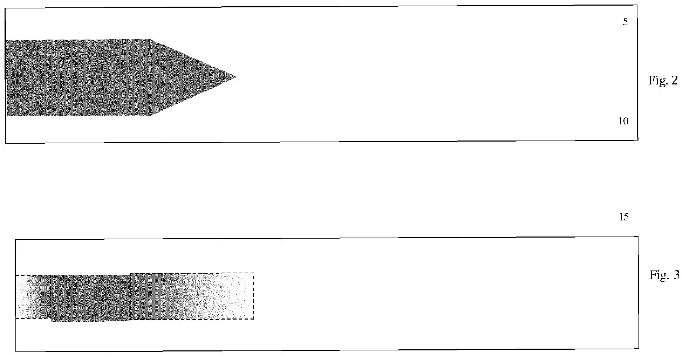

The production of interlayer films based on plasticised polyvinyl acetal having a coloured or tinted region i.e. a shade band is known in a vast amount of different techniques and extrusion devices. In general, the coloured or tinted region is produced by incorporating a more or less wedge-shaped middle layer between two clear layers, resulting in a decrease of colour (or in increase of transparency) in direction of the lower part of the windscreen. Fig. 2 and 3 show schematically a coloured middle layer between two clear layers with a decrease of colour.

Interlayer films for automotive application are usually produced by embossing in order to provide a regular (non-stochastic) surface structure which exhibits good ventilation behaviour particularly in the production process for glass laminates by the vacuum bag process. Embossing of interlayer films is for example described in WO2016030284A1.

However, shade band films as depicted in Fig. 2 and 3 exhibit at the coloured or tinted region two inner interfaces at the layers. Such films are for example disclosed in EP 3070063A1. Since the clear and coloured material have a different composition, they have different mechanical properties. Such different mechanical properties may result during embossing to optical distortion at the inner interfaces, even if the rest of the film comprising only clear material (i.e. one layer) is free of optical distortions

EP 3 029 001 A1 discloses an interlayer film for laminated glass adapted for preventing the formation of ghost images while maintaining excellent deaerating properties, that comprises 2 or more resin layers laminated on each other, wherein the interlayer film has a large number of recesses and a large number of protrusions on at least one surface thereof, the recesses each have a groove shape with a continuous bottom, the recesses adjacent to each other are parallel to each other and regularly arranged in a line, within the surface including the large number of recesses and the large number of protrusions, a groove depth (Rzg) of the recesses measured based on JIS B-0601 (1994) is 10 to 40 µm, and a 10-point average roughness (Rz) of a surface of a resin layer having the surface including the large number of recesses and the large number of protrusions measured based on JIS B 0601(1994) is less than 2.7 µm, and the 10-point average roughness (Rz) is obtained by peeling off the resin layer having the surface including the large number of recesses and the large number of protrusions from another resin layer coming into direct contact with the aforementioned resin layer and then measuring the surface of the peeled off resin on a side of the aforementioned another resin layer that came into direct contact with the peeled off resin layer based on JIS B 0601 (1994).

It was therefore an object of the invention to provide an interlayer film with a shade band by embossing without optical distortions at the inner interfaces of the shade band area.

It was found that optical distortions created by embossing the shade band area can be avoided when the surface structure created by embossing has certain properties.

### DESCRIPTION OF THE INVENTION

Object of the present invention is a interlayer film with a transparent and a non-transparent region, wherein the non-transparent region is provided by two outer layers comprising a first mixture of at least one plasticizer and at least one polyvinylacetal and one inner layer comprising a second mixture of at least one plasticizer and at least one polyvinylacetal and the transparent region is provided by one layer comprising a third mixture of at least one plasticizer and at least one polyvinylacetal wherein the first and the third mixture have a transmission for light having a wavelength of 380 to 780 nm of at least 85% and the second mixture has a transmission for light having a wavelength of 380 to 780 nm of less than 80%, and wherein at least the non-transparent region is provided with a surface roughness with a ratio of Rz/Rv of 1,6 to 2,5 as measured according to EN ISO 4287.

Preferable, at least the non-transparent region is provided with a surface roughness having a ratio of Rz/Rv of 1,6 to 2,3, or 1,7 to 2,3; more preferred is a ratio Rz/Rv of 1.9 to 2.1. If the ratio Rz/Rv is greater than 2.5, bad de-airing and bad optical distortions occur. On the other hand, if the ratio Rz/Rv is smaller than 1,6, channels are too deep and bad edge sealing will be the result

The surface roughness of the film may further be embossed with a plurality of channels having a depth Rz of 20 to 100 µm

The channels have a depth of 5-50 µm, a width of 10-200 µm and a pitch of 50-2500 µm.

Rz and Rv are used in the present application as defined in EN ISO 4287. Rz stands for the mean roughness depth of the surface structures and Rv stands for the depth of the deepest profile valley of the roughness surface within the sampling length. Measuring the surface roughness of the film with the roughness value R_{Z} and a maximum profile valley depth of Rᵥ is conducted according to DIN EN ISO 4287. The measuring devices used to measure the surface roughness must satisfy EN ISO 3274. The profile filters used must correspond to DIN EN ISO 11562.

The surface roughness of the non-transparent region of the film can be identical to the surface roughness of the transparent region of the film and may be provided by first an extrusion of the film under melt-fracture conditions followed by an embossing step.

Accordingly, another object of the invention is a process for manufacture a interlayer film with a transparent and a non-transparent region, wherein the non-transparent region is provided by two outer layers comprising a first mixture of at least one plasticizer and at least one polyvinylacetal and one inner layer comprising a second mixture of at least one plasticizer and at least one polyvinylacetal and the transparent region is provided by one layer comprising a third mixture of at least one plasticizer and at least one polyvinylacetal wherein the first and the third mixture have a transmission for light having a wavelength of 380 to 780 nm of at least 85% and the second mixture has a transmission for light having a wavelength of 380 to 780 nm of less than 80%, wherein at least the non-transparent region is provided with a surface roughness with a ratio of Rz/Rv of 1,6 to 2,5 by extrusion of the film under melt-fracture conditions followed by an embossing step.

In preferred embodiments of the invention, the transmission of the inner layer for light having a wavelength of 380 to 780 nm is 3 - 75 %, more preferred 8 - 70 % and especially 15 - 60 %.

The inner layer embedded between the outer layers may have an area of 5 - 40 %, preferred 5 - 25 % of the total area of the interlayer film.

Usually, float glass and/or laminated glazing for automobile use has a transmission for light having a wavelength of 380 to 780 nm of at least 88 %.

For coloring, coloring agents, pigments and dyes can be used without particular limitation.

Examples of the pigment include organic pigments such as azo type, phthalocyanine type, quinacridone type, perylene type, dioxazine type, anthraquinone type, isoindolino type etc, oxides, hydroxides, sulfides, chromic acid, carbonates, silicates, Inorganic pigments such as arsenate, ferrocyanide, carbon, metal powder and the like.

Examples of the dye include dyes such as azo, anthraquinone, phthalocyanine, quinacridone, perylene, dioxazine, anthraquinone, indolinone, isoindolino, quinoneimine, triphenylmethane, thiazole, nitro and nitroso Dyes. Among them, azo type and anthraquinone type are preferably used as dyes which hardly block light rays having a wavelength of near infrared light (750 to 1000 nm) .

Shade band PVB film i.e. a film comprising plasticized polyvinylacetal having a non-transparent region and a transparent region can for example be extruded according to the method disclosed in WO2005090054A1. The outer layers of the non-transparent region combine outside the shade band (i.e. in the transparent region) into a single layer. Preferable, the outer layers have identical compositions. The inner layer may have the same composition - besides of the colour - as the outer layers.

The stochastic surface pattern on the elevations between the channels are created during the extrusion of the film and should remain during embossing essentially as obtained during extrusion.

Preferable, the surface roughness of the elevations between the channels obtained after embossing is at most 20%, more preferred at most 10% lower as obtained after extrusion. At best, the surface roughness of the elevations between the channels obtained after extrusion and embossing is identical. This can be achieved by an embossing tool which does not or not fully have contact with the film in the areas of the elevations.

The extrusion of the melt comprising plasticised polyvinyl acetal is preferable performed under melt fracture conditions with an extrusion die having lips which temperature can be adjusted. Such extrusion process is known to the person skilled in the art for example from EP 0 185 863 B1.

The stochastic surface pattern on the elevations between the channels may be the same or different on the surfaces of the film. Different surface patterns or roughness levels can be produced by varying the width of the discharge gap and the temperature of the die lips directly on the die exit during melt fracture extrusion.

It is preferred to perform the extrusion process to obtain a film with a stochastic roughness of the surfaces of Rz = 10 to 70 µm and more preferred to a film with a stochastic roughness of the surfaces of Rz = 25 to 60 µm.

In a first variant of the invention, the extrusion is performed under melt-fracture conditions with extrusion dies having a lip temperature of 100 - 270 °C, preferably 100 - 240 °C.

In a second variant of the invention, the extrusion under melt-fracture conditions is performed with a melt flow rate of 500-3500 kg/h.

Subsequent to extrusion, the film is subjected to embossing in step b) on one or both sides, independently in each case, with a surface structure and a roughness depth of R_{z} = 20 to 100 µm, preferably R_{z} = 20 to 80 µm, in particular R_{z} = 25 µm to 70 µm.

The final surfaces structure of the film can be embossed in a single step or preferable in two distinct embossing steps. In single step embossing, two embossing rolls are used, whereas in multiple step embossing, an embossing roller and a pressure roller is used. The pressing roller has preferable a surface of rubber with a Shore A hardness of 20 - 80.

The embossing step according to the invention can be carried out in such a way that the two sides of the structured film have different roughness depths R_{z}. This can be achieved e.g. by different embossing tools or temperatures of the embossing tools and/or the pressing rollers.

The channels on both surfaces of the film may share an angle of 70 to 90° or 5 - 45° with each other. In another aspect, the channels on at least one surface of the film have an angle of 5 - 45°, preferably 35-45° to the direction of extrusion.

The pitch of the channels can be the same or different on the surfaces of the film, where a deviation of 5% between the surfaces is regarded as same. The pitch of the channels can be 100-1500 µm, preferable 200 - 1000 µm.

Before and/or after the embossing process, the film can be cooled to -10 to +40 °C to fix the surface structure of the film in this way. Cooling preferably takes place via correspondingly temperature-adjusted cooling rollers.

Preferably, the embossing rollers are made of metal or ceramics and possess a surface with a negative profile pattern of the structure present later on in the film surface. Higher depth of channel of embossing rollers than the intended roughness of the film is preferable to keep melt fracture surface after embossing.

The temperature of the embossing rollers is 80 to 200 °C, especially 80 to 170 °C, preferably 100 to 160 °C and in particular 110 to 155 °C. Particularly preferably, the embossing rollers have a coated steel surface (e.g. with polymer or ceramics) in order to reduce the adhesion of the film.

In a first embodiment, the extruded film is embossed between two embossing rollers having the same or different surface embossment.

In another embodiment of the invention, the film is guided between the embossing roller and the pressing roller rotating in the opposite sense. Preferably, the film is exposed, between the embossing rollers and/or embossing and pressing rollers to a line pressure of 10 to 400 N/mm, especially 10 to 150 N/mm, preferable 30 to 130 N/mm and in particular 40 to 110 N/mm. The line pressure can be the same or different if several process steps b) are conducted. Line pressure means the pressing force of the roller pair based on the film width.

The pressing rollers have preferable a temperature of 0 to 50 °C, preferably 5 to 30 °C, i.e. they are actively cooled vis-à-vis the embossing roller. The temperature of the pressing rollers may be the same or different in process steps b).

The pressing rollers press the film into the structured surface of the embossing rollers and nestle lightly against the embossing roller. By changing the line pressure, the surface of the embossing zone and consequently the residence time of the film in the roller gap can be altered.

By selecting the process parameters of line pressure, film temperature and/or roller temperature, roller speed and enveloping angle of the film web on the rollers, the roughness depth of the film embossing can be influenced with a given roughness depth of the embossing rollers.

In this case, too, the film can be guided through the roller gap of the temperature-adjustment rollers directly, i.e. without passing around them.

It is possible to use in particular polyvinyl butyral (PVB), in the crosslinked or non-crosslinked form as partially acetalated polyvinyl alcohol, in mixture with at least one plasticiser, metal salts for adhesion regulation, organic additives and/or inorganic fillers.

All plasticisers known in the art for this purpose, in particular the esters of multivalent acids, polyhydric alcohols or oligoether glycols, such as e.g. adipic acid esters, sebacic acid esters or phthalic acid esters, in particular di-n-hexyl adipate, dibutyl sebacate, dioctyl phthalate, esters of diglycol, triglycol or tetraglycol with linear or branched aliphatic carboxylic acids and mixtures of these esters are suitable, on the one hand, as plasticisers for the partially acetalated polyvinyl alcohols. Esters of aliphatic diols with long chain aliphatic carboxylic acids, in particular esters of triethylene glycol with aliphatic carboxylic acids containing 6 to 10 C atoms, such as 2-ethyl butyric acid or n-heptanoic acid are preferably used as standard plasticisers for partially acetalated polyvinyl alcohols, in particular polyvinyl butyral. One or several plasticisers from the group consisting of di-n-hexyl adipate (DHA), dibutyl sebacate (DBS), dioctyl phthalate (DOP), esters of diglycol, triglycol or tetraglycol with linear or branched aliphatic carboxylic acids, in particular triethylene glycol-bis-2-ethyl butyrate (3GH), triethylene glycol-bis-n-heptanoate (3G7), triethylene glycol-bis-2-ethyl hexanoate (3G8), tetraethylene glycol-bis-n-heptanoate (4G7) are used particularly preferably.

In a particular embodiment of the present invention, the adhesion of the film to the embossing tools can be further reduced by adding a substance reducing adhesion to the film material.

The plasticised partially acetalated polyvinyl alcohol resin preferably contains 25 to 45 parts by weight and pyrticularly preferably 30 to 40 parts by weight of plasticiser, based on 100 parts by weight of resin.

The partially acetalated polyvinyl alcohols are produced in the known way by acetalation of hydrolysed polyvinyl esters. Formaldehyde, acetaldehyde, propionaldehyde, butyraldehyde and such like, preferably butyraldehyde, for example, are used as aldehydes.

The preferred polyvinyl butyral resin contains 10 to 25% by weight, preferably 17 to 23% by weight and particularly preferably 19 to 21% by weight of vinyl alcohol radicals and/or 0 to 20% by weight, preferably 0.5 to 2.5% by weight of acetate radicals.

In a further process variation, a PVB partially crosslinked with a polyaldehyde (in particular glutaraldehyde) and an oxocarboxylic acid (in particular glyoxylic acid) is used as polymer according to WO 2004/063231 A1. Such a partially crosslinked PVB has a viscosity which is 10 to 50% higher than that of the analogous non-crosslinked PVB.

The water content of the films is preferably adjusted to 0.15 to 0.8% by weight, in particular to 0.3 to 0.5% by weight.

The films produced according to the invention can be used in particular for the manufacture of laminates from one or several glass panes and/or one or several polymer panes and at least one structured film.

During the manufacture of these laminates, a pre-composite is first produced from the glass/polymer panes and the film by pressing, vacuum bag or vacuum ring. As a rule, pre-composite laminates are slightly turbid as a result of air inclusions. The final manufacture of the laminate takes place in the autoclave e.g. according to WO 03/033583.

### EXAMPLES

### Example according to the invention

0.76mm thick PVB film with blue shade band containing a nominal level of 38 parts plasticizer per 100 parts PVB resin is extruded according to the method disclosed in WO2005090054A1 with the following conditions.
Lip temperature: 195 °C.
Melt flow rate: 1000 kg/h.
Line speed; 15m/min

This PVB film has a melt fracture surface roughness on each side characterized by value of Rz melt fracture of 33 µm (microns). The shade band layer thickness is 300 µm with a light transmittance measured at the edge of the interlayer at the shade band area of 7%.

The outer layers of the non-transparent region combine outside the shade band (i.e. in the transparent region) into a single layer and have identical compositions. The inner layer has besides of the colour the same composition as the outer layers.

This PVB film is embossed between two sets of pressing and embossing rollers with the following properties:

### Facility parameters:

| | |
|---|---|
| Hardness of the rubber roller: | 70 ± 5 Shore A |
| Roughness of the embossing roller: | approximately 200 µm |
| Pitch of embossing roller: | approximately 500 µm |
| Angle of the channel: | 45 ° |
| Surface coating: | Polymer |
| Temperature of rubber roller | 10 °C |

| Example No. | T of embossing roller (°C) |
|---|---|
| 1 | 135 |
| 2 | 130 |
| 3 | 145 |
| 4 | 120 |
| 5 | 115 |
| 6 | 60 |
| 7 | 155 |

The pressing and embossing rollers of the two embossing stages had identical properties.

The properties of the film are shown in the following tables, wherein "Rz by melt fraction" stands for the roughness after extrusion under melt fracture conditions. "Rz final" stands for the roughness after embossing. "Rv final" stands for the roughness of valley depth after embossing. All values were measured according to DIN ISO 4287.

Example 1 - 4 are according to the invention, whereas examples 5, 6 and 7 are comparative examples.

| No. | Upper side (µm) | | | |
|---|---|---|---|---|
| | Rz final | Rz created by melt fraction | Rv final | Rz final/ Rv final |
| 1 | 50 | 32 | 28 | 1.8 |
| 2 | 45 | 32 | 23 | 2.0 |
| 3 | 59 | 31 | 37 | 1.6 |
| 4 | 40 | 33 | 18 | 2.2 |
| 5 | 36 | 33 | 14 | 2.6 |
| 6 | 33 | 33 | 12 | 2.8 |
| 7 | 69 | 29 | 47 | 1.5 |

| No. | Lower side (µm) | | | |
|---|---|---|---|---|
| | Rz final | Rz created by melt fraction | Rv final | Rz final/ Rv final |
| 1 | 51 | 32 | 29 | 1.8 |
| 2 | 45 | 33 | 22 | 2.0 |
| 3 | 58 | 31 | 37 | 1.6 |
| 4 | 41 | 33 | 18 | 2.3 |
| 5 | 36 | 33 | 14 | 2.6 |
| 6 | 33 | 33 | 12 | 2.7 |
| 7 | 70 | 30 | 47 | 1.5 |

The optical distortion of the non-transparent region is evaluated by eye inspection. Any optical distortion is seen as mottled pattern.

| No. | Performance after lamination | | |
|---|---|---|---|
| | De-airing | Optical distortion | Edge sealing |
| 1 | Good | Good | Good |
| 2 | Good | Good | Good |
| 3 | Good | Good | Good |
| 4 | Good | Good | Good |
| 5 | Fair | Fair | Good |
| 6 | Bad | Bad | Good |
| 7 | Good | Bad | Bad |

Films according to comparative example 6 show almost no embossing pattern due to low temperature embossing. Bad de-airing and optical distortion results. Films according to comparative example 7 show too much embossing pattern due to high temperature embossing. So, bad edge sealing and optical distortion results.

With the process of the invention, plasticized polyvinyl acetal films with shade band can be produced which have a good optical distortion and better lamination yield.

## Claims

1. Interlayer film with a transparent and a non-transparent region, wherein the non-transparent region is provided by two outer layers comprising a first mixture of at least one plasticizer and at least one polyvinylacetal and one inner layer comprising a second mixture of at least one plasticizer and at least one polyvinylacetal and the transparent region is provided by one layer comprising a third mixture of at least one plasticizer and at least one polyvinylacetal **characterized in that** the first and the third mixture have a transmission for light having a wavelength of 380 to 780 nm of at least 85% and the second mixture has a transmission for light having a wavelength of 380 to 780 nm of less than 80%, and wherein at least the non-transparent region is provided with a surface roughness with a ratio of Rz/Rv of 1,6 to 2,5 as measured according to EN ISO 4287.

2. Interlayer film according to claim 1 **characterized in that** the film is be provided with a plurality of channels having a depth of 20 to 100 µm.

3. Interlayer film according to claim 2 **characterized in that** the channels have a depth of 5 - 50 µm, a width of 10 - 200 µm and a pitch of 50 - 2500 µm.

4. Interlayer film according to claim 1 **characterized in that** the channels are provided by embossing a film having a stochastic roughness of at least the non-transparent region of Rz = 1 to 70 µm between at least one embossing roll and at least one pressure roll.

5. Interlayer film according to claim 1 **characterized in that** the stochastic roughness of at least the non-transparent region is provided by melt-fracture extrusion the film.

6. Interlayer film according to at least one of the claims 1 - 4 **characterized in that** the inner layer comprises a dye or a pigment.

7. Interlayer film according to at least one of the claims 1 - 5 **characterized in that** the area of the inner layer embedded between the outer layers is 5 - 40 % of the total area of the film.

8. Process for manufacture a interlayer film with a transparent and a non-transparent region, wherein the non-transparent region is provided by two outer layers comprising a first mixture of at least one plasticizer and at least one polyvinylacetal and one inner layer comprising a second mixture of at least one plasticizer and at least one polyvinylacetal and the transparent region is provided by one layer comprising a third mixture of at least one plasticizer and at least one polyvinylacetal wherein the first and the third mixture have a transmission for light having a wavelength of 380 to 780 nm of at least 85% and the second mixture has a transmission for light having a wavelength of 380 to 780 nm of less than 80%, **characterized in that** at least the non-transparent region is provided with a surface roughness with a ratio of Rz/Rv of 1,6 to 2,5 by extrusion of the film under melt-fracture conditions followed by an embossing step.

9. Process according to claim 8 **characterized in that a** film with a transparent and a non-transparent region with a stochastic roughness of the surfaces of Rz = 1 to 70 µm is extruded and then embossed between at least one embossing roll and at least one pressure roll.

10. Process according to claim 8 or 9 **characterized in that** the film is embossed with a plurality of channels having a depth of 20 to 100 µm.

11. Process according to any of the claim 8 to 10 **characterized in that** the channels have a depth of 5 - 50 µm, a width of 10 - 200 µm and a pitch of 50 - 2500 µm.

## Patentansprüche

1. Zwischenschichtfolie mit einem transparenten und einem nicht-transparenten Bereich, wobei der nicht-transparente Bereich durch zwei äußere Schichten, die eine erste Mischung aus mindestens einem Weichmacher und mindestens einem Polyvinylacetal umfassen, und eine innere Schicht, die eine zweite Mischung aus mindestens einem Weichmacher und mindestens einem Polyvinylacetal umfasst, bereitgestellt wird, und der transparente Bereich wird durch eine Schicht, die eine dritte Mischung aus mindestens einem Weichmacher und mindestens einem Polyvinylacetal umfasst, bereitgestellt, **dadurch gekennzeichnet, dass** die erste und die dritte Mischung eine Durchlässigkeit für Licht mit einer Wellenlänge von 380 bis 780 nm von mindestens 85 % aufweisen und die zweite Mischung eine Durchlässigkeit für Licht mit einer Wellenlänge von 380 bis 780 nm von weniger als 80 % aufweist, und wobei mindestens der nicht-transparente Bereich mit einer Oberflächenrauheit mit einem Rz/Rv-Verhältnis von 1,6 bis 2,5, gemessen nach EN ISO 4287, bereitgestellt wird.

2. Zwischenschichtfolie nach Anspruch 1, **dadurch gekennzeichnet, dass** die Folie mit einer Vielzahl von Kanälen mit einer Tiefe von 20 bis 100 µm bereitgestellt ist.

3. Zwischenschichtfolie nach Anspruch 2, **dadurch gekennzeichnet, dass** die Kanäle eine Tiefe von 5 bis 50 µm, eine Breite von 10 bis 200 µm und einen Abstand von 50 bis 2500 µm aufweisen.

4. Zwischenschichtfolie nach Anspruch 1, **dadurch gekennzeichnet, dass** die Kanäle durch Prägen einer Folie mit einer stochastischen Rauheit mindestens des nicht-transparenten Bereichs von Rz = 1 bis 70 µm zwischen mindestens einer Prägewalze und mindestens einer Druckwalze bereitgestellt werden.

5. Zwischenschichtfolie nach Anspruch 1, **dadurch gekennzeichnet, dass** die stochastische Rauheit mindestens des nicht-transparenten Bereichs durch Schmelzbruchextrusion der Folie bereitgestellt wird.

6. Zwischenschichtfolie nach mindestens einem der Ansprüche 1 bis 4, **dadurch gekennzeichnet, dass** die innere Schicht einen Farbstoff oder ein Pigment umfasst.

7. Zwischenschichtfolie nach mindestens einem der Ansprüche 1 bis 5, **dadurch gekennzeichnet, dass** die Fläche der zwischen den äußeren Schichten eingebetteten inneren Schicht 5 bis 40 % der Gesamtfläche der Folie beträgt.

8. Verfahren zur Herstellung einer Zwischenschichtfolie mit einem transparenten und einem nicht-transparenten Bereich, wobei der nicht-transparente Bereich durch zwei äußere Schichten, die eine erste Mischung aus mindestens einem Weichmacher und mindestens einem Polyvinylacetal umfassen, und eine innere Schicht, die eine zweite Mischung aus mindestens einem Weichmacher und mindestens einem Polyvinylacetal umfasst, bereitgestellt wird, und der transparente Bereich wird durch eine Schicht, die eine dritte Mischung aus mindestens einem Weichmacher und mindestens einem Polyvinylacetal umfasst, bereitgestellt, wobei die erste und die dritte Mischung eine Durchlässigkeit für Licht mit einer Wellenlänge von 380 bis 780 nm von mindestens 85 % aufweisen und die zweite Mischung eine Durchlässigkeit für Licht mit einer Wellenlänge von 380 bis 780 nm von weniger als 80 % aufweist, **dadurch gekennzeichnet, dass** mindestens der nicht-transparente Bereich mit einer Oberflächenrauheit durch Extrusion der Folie unter Schmelzbruchbedingungen, gefolgt von einem Prägeschritt, mit einem Rz/Rv-Verhältnis von 1,6 bis 2,5 bereitgestellt wird.

9. Verfahren nach Anspruch 8, **dadurch gekennzeichnet, dass** eine Folie mit einem transparenten und einem nicht-transparenten Bereich mit einer stochastischen Oberflächenrauheit von Rz = 1 bis 70 µm extrudiert und dann zwischen mindestens einer Prägewalze und mindestens einer Druckwalze geprägt wird.

10. Verfahren nach Anspruch 8 oder 9, **dadurch gekennzeichnet, dass** die Folie mit einer Vielzahl von Kanälen mit einer Tiefe von 20 bis 100 µm geprägt ist.

11. Verfahren nach einem der Ansprüche 8 bis 10, **dadurch gekennzeichnet, dass** die Kanäle eine Tiefe von 5 bis 50 µm, eine Breite von 10 bis 200 µm und einen Abstand von 50 bis 2500 µm aufweisen.

## Revendications

1. Film d'intercouche avec une zone transparente et une zone non transparente, dans lequel la zone non transparente est fournie par deux couches externes comprenant un premier mélange d'au moins un plastifiant et d'au moins un polyvinylacétal et une couche interne comprenant un deuxième mélange d'au moins un plastifiant et d'au moins un polyvinylacétal et la zone transparente est fournie par une couche comprenant un troisième mélange d'au moins un plastifiant et d'au moins un polyvinylacétal, **caractérisé en ce que** le premier et le troisième mélanges ont une transmission pour la lumière ayant une longueur d'onde de 380 à 780 nm d'au moins 85 % et le deuxième mélange a une transmission pour la lumière ayant une longueur d'onde de 380 à 780 nm de moins de 80 %, et au moins la zone transparente étant fournie avec une rugosité de surface avec un rapport de Rz/Rv de 1,6 à 2,5 tel que mesuré selon la norme EN ISO 4287.

2. Film d'intercouche selon la revendication 1, **caractérisé en ce que** le film doit être fourni avec une pluralité de canaux ayant une profondeur de 20 à 100 µm.

3. Film d'intercouche selon la revendication 2, **caractérisé en ce que** les canaux ont une profondeur de 5 à 50 µm, une largeur de 10 à 200 µm et une hauteur de 50 à 2500 µm.

4. Film d'intercouche selon la revendication 1, **caractérisé en ce que** les canaux sont fournis par embossage d'un film ayant une rugosité stochastique d'au moins la zone non transparente de Rz = 1 à 70 µm entre au moins un rouleau d'embossage et au moins un rouleau de pression.

5. Film d'intercouche selon la revendication 1, **caractérisé en ce que** la rugosité stochastique d'au moins la zone non transparente est fournie par extrusion de fracture à chaud du film.

6. Film d'intercouche selon au moins une des revendications 1 à 4, **caractérisé en ce que** la couche interne comprend un colorant ou un pigment.

7. Film d'intercouche selon au moins une des revendications 1 à 5, **caractérisé en ce que** la surface de la couche interne incluse entre les couches externes est de 5 à 40 % de la surface totale du film.

8. Procédé de fabrication d'un film d'intercouche avec une zone transparente et une zone non transparente, dans lequel la zone non transparente est fournie par deux couches externes comprenant un premier mélange d'au moins un plastifiant et d'au moins un polyvinylacétal et une couche interne comprenant un deuxième mélange d'au moins un plastifiant et d'au moins un polyvinylacétal et la zone transparente est fournie par une couche comprenant un troisième mélange d'au moins un plastifiant et d'au moins un polyvinylacétal, le premier et le troisième mélange ayant une transmission pour la lumière ayant une longueur d'onde de 380 à 780 nm d'au moins 85 % et le deuxième mélange ayant une transmission pour la lumière ayant une longueur d'onde de 380 à 780 nm de moins de 80 %, **caractérisé en ce qu'**au moins la zone non transparente est fournie avec une rugosité de surface avec un rapport Rz/Rv de 1,6 à 2,5 par extrusion du film dans des conditions de fracture à chaud suivi par une étape d'embossage.

9. Procédé selon la revendication 8, **caractérisé en ce qu'**un film avec une zone transparente et une zone non transparente avec une rugosité stochastique des surfaces de Rz = 1 à 70 µm est extrudé puis embossé entre au moins un rouleau d'embossage et au moins un rouleau de pression.

10. Procédé selon la revendication 8 ou 9, **caractérisé en ce que** le film est embossé avec une pluralité de canaux ayant une profondeur de 20 à 100 µm.

11. Procédé selon l'une quelconque des revendications 8 à 10, **caractérisé en ce que** les canaux ont une profondeur de 5 à 50 µm, une largeur de 10 à 200 µm et une hauteur de 50 à 2500 µm.
